# EUROPEAN PATENT APPLICATION

(11) **EP 0 953 282 A1**
(43) Date of publication of application: **03.11.1999**
(21) Application number: 98810170.5
(22) Date of filing: 02.03.1998
(51) Int. Cl.: A01N 25/26, A01N 51/00, A01N 47/24, A01N 43/82

(54) **Pesticidal compositions**

(71) Applicant: Novartis AG, 4058 Basel (CH)
(72) Inventor: The designation of the inventor has not yet been filed

(57) **Abstract**

A solid, coated pesticidal composition, comprising a pesticide which is formulated together with an inert carrier and a surfactant in granular, powdery or tablet form, which form is coated with a water-emulsifiable thermoplastic polymer, and wherein the pesticide is selected from the group consisting of acibenzolar-S-methyl, furathiocarb and thiamethoxam.

## Description

The present invention relates to solid, coated pesticidal compositions, comprising a pesticide which is formulated together with an inert carrier in granular, powdery or tablet form, which form is coated with a water-emulsifiable thermoplastic polymer, and wherein the pesticide is selected from the group consisting of acibenzolar-S-methyl, furathiocarb and thiamethoxam.
Acibenzolar-S-methyl is a plant activator, furathiocarb is an insecticide; both are described in The Pesticide Manual, 11th Ed, British Crop Protection Council.
Thiamethoxam is 5- (2-chlorothiazol-5-ylmethyl)-3-methyl-4-nitroimino-perhydro-1,3,5-oxadiazine, an insecticide, known from EP-A-580,553.

Pesticides on solid carriers which are coated with thermoplastic resins are known, for example from EP-A-25 255. Such formulations exhibit a slow release of the active ingredient, prolonged biological activity and improved handling and application safety. However the known formulations and methods are not always suitable for all pesticides. It is therefore a need for a formulation of specific pesticides having efficient and predictable sustained-release properties whithout impairing their initial activity.

It has now surprisingly been found that with the compositions according to this invention a controlled release for the pesticides acibenzolar-S-methyl, furathiocarb, thiamethoxam and mixtures thereof can be achieved at approximately constant rate over 100 days and more. Since the period of efficacy of the active ingredient can be regulated by the number, kind and thickness of the coating layers, the application rate may be optimized and the active ingredient necessary per unit area treated may be reduced. Further advantages are safer handling due to avoiding exposure to dust of pesticides and no residues of pesticides in the package.

The term "a granule" is understood to be a particle of any shape having a grain size of 0.1-5 mm, whilst "a powder" is a particle of any shape having a grain size smaller than that. "A tablet" is understood to be a particle of any shape having a grain size of 5mm-50mm. Preferred are granules, in particular with a size of 0.3-5 mm, more particular 1-3 mm.

The solid carriers used are normally natural mineral fillers, such as calcite, talcum, kaolin, montmorillonite or attapulgite. In order to improve the physical properties it is also possible to add highly dispersed silicic acid or highly dispersed absorbent polymers. Suitable granulated adsorptive carriers are porous types, for example pumice, broken brick, sepiolite or bentonite, and suitable nonsorbent carriers are, for example, calcite or sand. In addition, a great number of pregranulated materials of inorganic or organic nature can be used, e.g. especially dolomite or pulverised plant residues.

Suitable surfactants and dispersants agents are non-ionic, cationic and/or anionic having good emulsifying, dispersing and wetting properties.
Suitable anionic dispersants/surfactants are for example
A. Salts of polystyrenesulfonic acid, in particular the alkali metal, alkaline earth metal and ammonium salts;
B. Salts of polyvinylsulfonic acid, in particular the alkali metal, alkaline earth metal and ammonium salts;
C. Salts of condensates of naphthalenesulfonic acids, preferably naphthalene-2-sulfonic acid, with formaldehyde, in particular the alkali metal, alkaline earth metal and ammonium salts;
D. Salts of condensates of naphthalenesulfonic acid with phenolsulfonic acid and form aldehyde, in particular the alkali metal, alkaline earth metal and ammonium salts;
E. Salts of ligninsulfonic acid, in particular the sodium, potassium, magnesium, calcium or ammonium salt;
F. Salts of naphthalenesulfonic acids, in particular the alkali metal, alkaline earth metal and ammonium salts.
Suitable nonionic dispersants/surfactants are for example polyvinyl alcohol, polyvinyl methyl ether, polyvinylpyrrolidone, alkylated polyvinylpyrrolidone, hydroxy ethyl cellulose, hydroxypropyl cellulose, methyl cellulose (degree of substitution: 1.5 to 2), hydroxyethylmethyl cellulose, hydroxypropylmethyl cellulose, poly (2-hydroxyethyl)meth acrylate, poly[2-(2-hydroxyethoxy)ethyl]methacrylate, polyethylene oxide (poly oxyethylene) and polyallyl alcohol (polyglycidol);
products which can be obtained by reaction of ethylene oxide, or by the combined reaction of ethylene oxide and propylene oxide, with fatty alcohols, alkyl phenols, styrenephenols, fatty acids, fatty acid esters of polyhydroxy compounds, castor oil, fatty acid amides and fatty amines, where the number of ethylene oxide and propylene oxide units may vary within wide limits. In general, the number of ethylene oxide units or ethylene oxide and propylene oxide units is from 1 to 200, preferably from 5 to 100 and, most preferably, from 8 to 40.
Suitable cationic dispersants/surfactants are for example quaternary ammonium salts which contain, as N-substituent, at least one C₈-C₂₂ alkyl radical and, as further substituents, unsubstituted or halogenated lower alkyl, benzyl or hydroxy-lower alkyl radicals.

The granule, powder or tablet formulation of the pesticide can be produced by any known method, such as mixing the active ingredients with the carrier materials, dispersants/surfactants and adjuvants, subsequently granulation by means of extrusion, compaction, agglomeration by fluidized bed granulator or agitation granulator; milling by means of mechanical milling, e.g. hammer mill, or by means of wet milling, e.g. beads mill; tabletting by means of roller compactor.

The composition according to the invention may comprise additional pesticides and/or other ingredients, such as fertilizers, binders, carrier materials and the like customarily used in the art.

Prior to coating with the water-emulsifiable thermoplastic polymer, the granules, powders and tablets comprising the pesticide may be coated entirely or partially with a hydrophobic liquid, such as olive oil, palm oil, soybean oil, liquid paraffin or the like; preferably with liquid paraffin. The hydrophobic liquid is used in an amount of 0.01 -10wt%, preferably 0.05-5wt%, most preferably 0.1-1wt%, based on the total weight of the formulation.

The granules, powders and tablets are coated with one or more layers of a water-emulsifiable thermoplastic polymer. The number of layers can be determined in accordance with the required release properties of pesticides. In general, the more the number of layers, the slower the release of active ingredients. The number of the coating layers is 1-20, preferably 2-15, more preferably 2-10.

The above layers usually have a thickness of 30-250 µm, preferably 40-200µm, more preferably 40-150µm.

"Water-emulsifiable thermoplastic polymer" according to the present invention means any polymer which is water-emulsifiable, thermoplastic and film forming. They are well known in the art.
Examples of such polymers include polyethylene, polypropylene and copolymers of ethylene and/or propylene with unsubstituted or substituted olefins as comonomers; polyvinyl alcohol and copolymers of vinyl alcohol with unsubstituted or substituted olefins as comonomers; polymethacrylates, polyacrylates and copolymers of methacrylates and/or acrylates with unsubstituted or substituted olefins as comonomers; polymethacrylic acid, polyacrylic acid and polymaleic acid and copolymers of methacrylic acid, acrylic acid and/or maleic acid with unsubstituted or substituted olefins as comonomers; polymaleic acid esters and copolymers of maleic acid esters with unsubstituted or substituted olefins as comonomers; polyvinylacetate and copolymers of vinylacetate with unsubstituted or substituted olefins as comonomers; polyacrylonitrile and copolymers of acrylonitrile with unsubstituted or substituted olefins as comonomers; polyacrylamide and polymethacrylamide and copolymers of acrylamide, methacrylamide or both with unsubstituted or substituted olefins as comonomers; polyhydroxyalkyl- or polyaminoalkyl vinylalcohol and copolymers of hydroxyalkylvinylether, aminoalkylvinylether or both with unsubstituted or substituted olefins as comonomers; polybutadiene, polyisoprene, polychloroprene and copolymers of butadiene, isoprene, chloroprene or two or three of these with unsubstituted or substituted olefins as comonomers; hydroxylated polybutadienes from butadiene, isoprene or chloroprene and copolymers of butadiene, isoprene, chloroprene or two or three of these monomers with unsubstituted or substituted olefins as comonomers; polystyrene and copolymers of styrene with unsubstituted or substituted olefins; hydroxy- or aminopolystyrene, chloromethylpolystyrene, and polystyrenesulfonic acid and copolymers of hydroxystyrene, aminostyrene, chloromethylstyrene, polystyrenesulfonic acid, or two or more of these monomers with unsubstituted or substituted olefins as comonomers; polyurethanes.

Preferred polymers are for example polyethylene, polypropylene and copolymers of ethylene and/or propylene with unsubstituted or substituted olefins as comonomers; polymethacrylates, polyacrylates and copolymers of methacryaltes and/or acrylates with unsubstituted or substituted olefins as comonomers: polyvinylacetate and copolymers of vinylacetate with unsubstituted or substituted olefins as comonomers; polyacrylonitrile and copolymers of acrylonitrile with unsubstituted or substituted olefins as comonomers; copolymers of acrylamide or methacrylamide with unsubstituted or substituted olefins as comonomers; polybutadiene, polyisoprene, polychloroprene and copolymers of butadiene, isoprene, chloroprene or two or three of these with unsubstituted or substituted olefins as comonomers; copolymers of butadiene, isoprene, chloroprene or two or three of these monomers with unsubstituted or substituted olefins as comonomers; polystyrene and copolymers of styrene with unsubstituted or substituted olefins; copolymers of hydroxystyrene, aminostyrene, chloromethylstyrene or polystyrenesulfonic acid with unsubstituted or substituted olefins as comonomers; polyurethanes.

Particularly preferred polymers are for example polyacrylates, such as polymethylacrylate and polyethylacrylate; polymethtacrylates, such as polymethylmethacrylate and polyethylmethacrylate; polyvinylacetate; polystyrene; styrene/acrylate copolymers, such as styrene/methylacrylate and styrene/ethylacrylate; styrene/methacrylate copolymers, such as styrene/methylmethacrylate and styrene/ethylmethacrylate; vinylacetate/acrylate copolymers, such as vinylacetate/methylacrylate and vinylacetate/ethylacrylate; vinylacetate/methtacrylate copolymers, such as vinylacetate/methylmethacrylate and vinylacetate/ethylmethacrylate; ethylene/vinylacetate copolymer; ethylene/vinylacetate/acrylate terpolymers, such as ethylene/vinylacetate/methylacrylate; ethylene/vinyliacetate/methacrylate terpolymers, such as ethylene/vinylacetate/methylmethacrylate; polybutadiene; polyisoprene. Particularly preferred are polyacrylates and polyvinylacetate.

These polymers can be used alone or as mixtures.

If more than one layer are formed on the granule, powder or tablet according to the present invention, they do not necessarily need to be made of identical polymers. For example, the first layer can be made of polyvinylacetate, the second layer from a polyethylenepolyvinylacetate mixture, and the third layer from ethylene/vinylacetate/methylmethacrylate copolymer.
If the layers are consisting of different polymers, an "inter-phase boundary" is formed between the layers which can be observed for example by using an optical microscope or an electron microscope.

The polymer content of the granular, powdery or tablet formulation according to the present invention is 5-30wt%, preferably 5-25wt%, more preferably 5-20wt%, based on the total weight of the formulation.

The formulations of the present invention are preferably non-water-dispersible and may optionally be covered by other ingredients in order to avoid sticking together, for example by inorganic particles, such as talcum, clay, bentonite, calcium carbonate and the like, preferably by talcum. Such ingredients may be added in an amount of 0.01-10wt%, preferably 0.05-5wt%, most preferred 0.1-2wt%, based on the total weight of the formulation.

The invention further relates to a method for producing the composition as described above, comprising the steps
(1) charging the powder, granules or tablets comprising the pesticide into a mixer,
(2) optionally adding a hydrophobic liquid,
(3) adding an aqueous polymer emulsion,
(4) removing the water from the mixture prepared in steps (1)-(3) by bringing it into contact with overflowing air,
(5) optionally repeating the steps (3)-(4) until a desired number of polymer coating layers are formed,
wherein the steps(2)-(5) are carried out with the mixer rotating.

In a preferred mode, steps (3) and (4) are carried out simultaneously and continuously. Step (4) is advantageously carried out with pre-dried air kept at a temperature of 25-50 °C.

As a mixer used in step (1), any mixer known in the art, such as an onion coating pan, may be used. Particularly preferred is a concrete mixer customarily used in construction engineering, which is another very surprising achievement of the present invention. It makes it possible to produce the composition according to the invention practically at any location, independent of high tech device and expensive installations.

The amount of the powder, granules or tablets to be charged into the mixer is determined in accordance with the capacity of the mixer as well as the required amount of the product.

Step (2) is an optional step. However, it is preferred to incorporate this step in view of prevention of the formation of agglomerates or flocculation of the powder, granule or tablet which eventually causes incomplete coating layers. Any hydrophobic liquid, such as olive oil, palm oil and soybean oil can be used. Most preferred hydrophobic liquid is a liquid paraffin. The hydrophobic liquid is added in an amount of 0.01-10wt%, preferably 0.05-5wt%, more preferably 0.1-1wt%, based on the total weight of the formulation.
The aqueous polymer emulsion used in step (3) is prepared from water-emulsifiable thermoplastic polymers by mixing with water.
The contact with dried air is usually achieved by means of air blow customarily used in the art. The blow rate can be selected in accordance with the amount of powder, granules or tablets of step (1) and that of the aqueous polymer emulsion of step (2). For example, blow rate of 45 m³/min is conveniently employed when the amount of granules (1 mm in diameter and 3mm in length) of an pesticide of step (1) is 200Kg and that of an aqueous PVAc (polyvinylacetate) emulsion (a 50% emulsion) of step (2) is 11.9Kg. Decrease in rate of drying can be detected by any known method, such as humidity detection.
Steps (3)-(4) are repeated until a desired number of coating layers are formed. The number of coating layers is 1-20, preferably 2-15, more preferably 2-10.
Steps (2)-(5) are carried out with the mixer rotating. If a granular pesticide is to be coated, rotation speed of 5-100rpm, preferably 5-50rpm, more preferably 5-30rpm is conveniently employed.
After step (4) or (5), other ingredients in order to avoid sticking together of the powder, granules or tablets may be added as described above.

The composition thus prepared may further be subjected to post drying in a conventional dryer at a temperature 20-100°C, preferably 30-80°C, more preferably 40-70°C.

A further aspect of the invention is a method of preventing or combatting undesirable plant growth and infestation of plants or animals by pests by applying a pesticidally effective amount of the composition of the invention to the cultivation area, to the plant or animal.

The present invention will be described more concretely in the following examples.

### Examples

### Characterization of materials

### Bion core GR2.5 / 2.7 / 2.8: (acibenzolar-S-methyl)

Granules in form of a rod-like granule having a diameter of about 1 mm and a length of about 3 mm, and consisting of
- 2.5%/2.7%/2.8%: of acibenzolar-S-methyl = benzo[1,2,3] thiadiazole-7-carbothoic acid-S-methyl ester, a plant activator protecting the plants from pathopgene attack by activating the plants natural defense system, a product of Novartis Agro AG
- 15%: Zeolite SGW, a product of ZEEKLITE Co., Ltd.
- 5%-6.5%: Amycol C (pregelatinized starch) a product of NIPPON STARCH CHEMICAL Co.,Ltd.
- ad 100%: Neoarit Clay, a product of NEORAITO KOSAN Co.,Ltd.

### Thiamethoxam core GR2.7:

Granules in form of a rod-like granule having a diameter of about 1mm and a length of about 3 mm, and consisting of
- 2.7%: 5- (2-chlorothiazol-5-ylmethyl)-3methyl-4-nitroimino-perhydro-1,3,5-oxadiazine, an insecticide
- 15%: Zeolite SGW
- 5%-6.5%: Amycol C (pregelatinized starch)
- ad 100%: Neoarit Clay

PVAc: Polyvinylacetate
SH-502: a PVAc 50% emulsion, a product of Showa Kobunshi Co.
AP4710: an acrylic polymer 50% emulsion, a product of Shows Kobunshi Co.
Moresco white P-70: a liquid paraffin, a product of Matsumura Oil Co.
Talcum 3S: talcum, a product of Matsumura Sangyo Co.)
SH-502: a PVAc 50% emulsion, a product of Shows Kobunshi Co.

### Suppliers addresses:

SHOWA HIGHPOLYMER Co.,Ltd; 3-20 Kandanishiki-cho Chiyoda-ku Tokyo, Japan
MATSUMURA OIL RESEARCH CORP; 10-33 Ashihara-cho Nishinomiya Hyogo, Japan
MATSUMURA SANGYO Co.,Ltd; 7-3-8 Tsukuda Nishiyodogawa-ku Osaka, Japan
HATA IRON WORKS Co.,Ltd; 20 Nakura-cho Nishihichijyo Shimokyo-ku Kyoto, Japan
ZEEKLITE Co.,Ltd.; 315 Itaya Yonezawa Yamagata, Japan
NIPPON STARCH CHEMICAL Co.,Ltd.; Sanyo Nissei-Bldg., 2-7 Kawaramachi 2-chome Chuo-ku Osaka, Japan
NEORAITO KOSAN Co.,Ltd.; 7-4-16 Kumata Sumiyoshi-ku Osaka, Japan
The Onion pan mixer is manufactured by Hata Tekkosho Co.

### Example 1 (Preparation Example)

(1) 890g of Bion core GR2.5 are charged into an Onion pan which pan thereafter is allowed to rotate constantly at a speed of ca. 20rpm.
(2) Then, 5g of Moresco white P-70 (a liquid paraffin) are added.
(3) Subsequently, 66.6g of SH-502 (a PVAc 50% emulsion, are added, followed by drying with air blow 0.6m³/min, 25°C, dried air for 3 minutes.
(4) The step (3) is repeated 3 times.
(5) Then, 5g of Talcum 3S are added.
(6) Finally, the thus obtained triply coated Bion core GR is subjected to post drying under the conditions of 60°C in inlet air temperature and over 50°C in outlet air temperature.

Thus a granular formulation having the following composition is produced:
- Overall coating layer thickness: 75µm
- Bion core GR2.5: 89.0wt%
- Liquid paraffin: 0.5wt%
- PVAc: 10wt%
- Talcum: 0.5wt%

### Example 2 (Preparation Example)

(1) 840g of Bion core GR2.7 are charged into an Onion pan which pan thereafter is allowed to rotate constantly at a speed of ca. 20rpm.
(2) Then, 5g of Moresco white P-70 (a liquid paraffin) are added.
(3) Subsequently, 50g of SH-502 (a PVAc 50 % emulsion) are added, followed by drying with air blow of 0.6m³/min, 25°C, dried air for 3 minutes.
(4) The step (3) is repeated 6 times.
(5) Then, 5g of Talcum are added.
(6) Finally, the thus obtained Bion core GR covered with six coating layers is subjected to post drying under the conditions of 60 °C in inlet air temperature and over 50 °C in outlet air temperature.

Thus, a granular formulation having the following composition is produced.:
- Overall coating layer thickness: 110µm
- Bion core GR2.7: 84.0wt%
- Liquid paraffin: 0.5wt%
- PVAc: 15wt%
- Talcum: 0.5wt%

### Example 3 (Preparation Example)

(1) 840g of Bion core GR2.7 are charged into an Onion pan which pan thereafter is allowed to rotate constantly at a speed of ca. 20rpm.
(2) Then, 5g of Moresco white P-70 (a liquid paraffin) are added.
(3) Subsequently, 54g of SH-502 (a PVAc 50% emulsion) are added, followed by drying with air blow of 0.6m³/min, 25°C, dried air for 3 minutes.
(4) The step (3) is repeated five times.
(5) 30g of AP4710 (an acrylic polymer 50% emulsion) are added, followed by drying with air blow of 0.6m³/min, 25°C, dried air for 3 minutes.
(6) Then, 5g of Talcum 3S are added.
(7) Finally, the thus obtained Bion core GR covered with five PVAc coating layers and one acrylic coating layer is subjected to post drying under the conditions of 60 °C in inlet air temperature and over 50°C in outlet air temperature.

Thus, a granular formulation having the following composition is produced:
- Overall Coating layer thickness: 110µm
- Bion core GR2.7: 84.0wt%
- Liquid paraffin: 0.5wt%
- PVAc: 13.5wt%
- Acrylic polymer: 1.5wt%
- Talcum: 0.5wt%

### Example 4 (Preparation Example)

(1) 840g of Bion core GR2.7 are charged into an Onion pan which pan thereafter is allowed to rotate constantly at a speed of ca. 20rpm.
(2) Then, 5g of Moresco white P-70 (a liquid paraffin) are added.
(3) Subsequently, 100g of SH-502 (a PVAc 50% emulsion) are added, followed by drying woth air blow of 0.6m³/min, 25°C, dried air for 3 minutes.
(4) The step (3) is repeated twice.
(5) 50g of SH-502 (a PVAc 50% emulsion) are added, followed by drying with air blow of 0.6m³/min, 25°C, dried air for 3 minutes.
(6) The step (5) is repeated twice.
(7) Then, 5g of Talcum 3S are added.
(8) Finally, the thus obtained Bion core GR covered with four coating layers is subjected to post drying under the conditions of 60 °C in inlet air temperature and over 50 °C in outlet air temperature.

Thus, a granular formulation having the following composition is produced:
- Overall coating layer thickness: 110µm
- Bion core GR2.7: 84.0wt%
- Liquid paraffin: 0.5wt%
- PVAc: 15wt%
- Talcum: 0.5wt%

### Example 5 (Preparation Example)

(1) 790g of Bion core GR2.8 are charged into an Onion pan, which pan thereafter is allowed to rotate constantly at a speed of ca. 20rpm.
(2) Then, 5g of Moresco white P-70 (a liquid paraffin) are added.
(3) Subsequently, 50g of AP4710 (an acrylic polymer 50% emulsion) a re added, followed by drying with air blow of 0.6m³/min, 25°C, dried air for 3 minutes.
(4) The step (3) is repeated 8 times.
(5) Then, 5g of Talcum 3S are added.
(6) Finally, the thus obtained Bion core GR covered with eight coating layers is subjected to post drying under the conditions of 60 °C in inlet air temperature and over 50 °C in outlet air temperature.

Thus, a granular formulation having the following composition is produced:
- Overall coating layer thickness: 150µm
- Bion core GR2.8: 79.0wt%
- Liquid paraffin: 0.5wt%
- Acrylic polymer: 20wt%
- Talcum: 0.5wt%

### Example 6 (Preparation Example)

(1) 200Kg of Bion core GR2.7 are charged into a concrete mixer, which mixer thereafter is allowed to rotate constantly at a speed of ca. 18rpm.
(2) Then, 1.2Kg of Moresco white P-70 (a liquid paraffin) are added.
(3) Subsequently, 11.9Kg of SH-502 (a PVAc 50% emulsion) are added, followed by drying with air blow of 45m³/min, 40°C, dry air for 7 minutes.
(4) The step (3) is repeated 6 times.
(5) Then, 1.2Kg of Talcum 3S are added.
(6) Finally, the thus obtained Bion core GR covered with six coating layers is subjected to drying under the conditions of 60 °C in inlet air temperature and over 50 °C in outlet air temperature.

Thus, a granular formulation having the following composition is produced:
- Overall coating thickness: 110µm
- Bion core GR2.7: 84.0wt%
- Liquid paraffin: 0.5wt%
- PVAc: 15wt%
- Talcum: 0.5wt%

### Example 7 (Preparation Example)

(1) 840g of Thiamethoxam core GR2.7 are charged into an Onion pan which pan thereafter is allowed to rotate constantly at a speed of ca. 20rpm.
(2) Then, 5g of Moresco white P-70 (a liquid paraffin) are added.
(3) Subsequently, 5-g of SH-502 (a PVAc 50% emulsion) are added, followed by drying with air blow of 0.6m³/min, 25°C, dried air for 3 minutes.
(4) The step (3) is repeated 6 times.
(5) Then, 5g of talcum 3S are added.
(6) Finally, the thus obtained Thiamethoxam core GR covered with six coating layer s is subjected to post drying under the conditions of 60 °C in inlet air temperature and over 50°C in outlet air temperature.

Thus, a granular formulation having the following composition is produced:
- Overall coating layer thickness: 110µm
- Thiamethoxam core GR2.7: 84.0wt%
- Liquid paraffin: 0.5wt%
- PVAc: 15wt%
- Talcum: 0.5wt%

### Example 8 (Release Test)

(1) 1000ml of medium water having a German hardness of 3 degrees are placed in a 1000ml stopped flask, to which 250mg of the granular formulation according to the Preparation Examples are charged. The temperature of said medium water is kept at 25 +-2°C. If some granules are floating on the surface of the medium water, they are sunk down to the bottom of the flask.
(2) Three days after preparation of the above test system, 10ml of the test solution are pipetted therefrom using a 10ml hole pipette, then transferred into a stopped centrifugation tube. When pipetting the test solution, the tip of the hole pipette is positioned at the medium point between the surface of the test solution and the bottom of the flask. After pipetting the test solution, 10ml of water having a German hardness of 3 degrees are added to the test system. If some granules are floating or flocculating in the test solution transferred to the centrifugation tube, it is centrifuged in order to sediment the granules.
(3) The test solution transferred into the centrifugation tube is then subjected to HPLC and/or GLC analysis in order to determine the Acibenzolar-S-methyl concentration in the test solution.
(4) The steps (2)-(3) are repeated after a number of days after preparation of the test system as indicated in the table below.

The results are shown in the following Table.

**Table 8**

| Results of release test | | | |
|---|---|---|---|
| | released pesticide in % | | |
| number of days after preparation | with composition of Example 2 BION (acibenzolar-S-methyl) | with composition of Example 3 BION (acibenzolar-S-methyl) | with composition of Example 7 thiamethoxam |
| 3 | 2 | 0.5 | 3 |
| 7 | 4 | 1 | 20 |
| 14 | 10 | 4 | 38 |
| 21 | 17 | 9 | 56 |
| 28 | 24 | 15 | 80 |
| 35 | | | 96 |
| 42 | 40 | 32 | |
| 56 | 54 | 46 | |
| 77 | 68 | 63 | |
| 105 | 83 | 76 | |
| 147 | 91 | 87 | |

## Claims

1. A solid, coated pesticidal composition, comprising a pesticide which is formulated together with an inert carrier and a surfactant in granular, powdery or tablet form, which form is coated with a water-emulsifiable thermoplastic polymer, and wherein the pesticide is selected from the group consisting of acibenzolar-S-methyl, furathiocarb and thiamethoxam.

2. A composition according to claim 1, wherein the pesticide is a mixture of acibenzolar-S-methyl and furathiocarb.

3. A composition according to claim 1, wherein the pesticide is formulated in granular form.

4. A composition according to claim 1, wherein the water-emulsifiable thermoplastic polymer is selected from the group consisting of polyacrylates, polymethacrylates, polyvinylacetate. polystyrene, styrene/acrylate copolymers, styrene/methacrylate copolymers, vinylacetate/acrylate copolymers, vinylacetate/methacrylate copolymers, ethylene/vinylacetate copolymer, ethylene/vinylacetate/acrylate terpolymers, ethylene/vinylacetate/methacrylate terpolymers, polybutadiene and polyisoprene.

5. A composition according to claim 1, wherein the granule, powder or tablet is pre-coated entirely or partially with a hydrophobic liquid.

6. A composition according to claim 1, wherein the granule, powder or tablet is additionally covered by talcum, clay, bentonite or calcium carbonate.

7. A method for producing the composition according to claim 1, comprising the steps
(1) charging the powder, granules or tablets comprising the pesticide into a mixer.
(2) optionally adding a hydrophobic liquid,
(3) adding an aqueous polymer emulsion,
(4) removing the water from the mixture prepared in steps (1)-(3) by bringing it into contact with overflowing air, optionally continuously and simultaneously with step (3)
(5) optionally repeating the steps (3)-(4) until a desired number or thickness of polymer coating layers are formed,
wherein the steps(2)-(5) are carried out with the mixer rotating.

8. A method according to claim 7, wherein step (4) is carried out with pre-dried air kept at a temperature of 25-50°C.

9. A method according to claim 7, wherein said mixer is a concrete mixer.

10. A method of preventing or combatting undesirable plant growth, infestation of plants or animals by pests by applying a pesticidally effective amount of the composition according to claim 1 to the cultivation area, to the plant or animal.
